# EUROPEAN PATENT SPECIFICATION

(11) **EP 2 410 834 B1**
(45) Date of publication and mention of the grant of the patent: **16.01.2013**
(21) Application number: 09787671.8
(22) Date of filing: 23.03.2009
(51) Int. Cl.: A01C 15/02, A01C 15/04

(54) **PORTABLE DEVICE FOR GRANULAR MATERIAL DISTRIBUTION**
TRAGBARE VORRICHTUNG ZUM VERTEILEN VON GRANULATFÖRMIGEM MATERIAL
DISPOSITIF PORTABLE UTILISÉ POUR LA RÉPARTITION DE MATÉRIAU GRANULAIRE

(43) Date of publication of application: 01.02.2012
(73) Proprietor: Cifarelli S.p.A., 27058 Voghera (Pavia) (IT)
(72) Inventor: CIFARELLI, Roberto, I-27058 Vioghera (Paiva) (IT)
(74) Representative: Tarabbia, Luigi
(86) International application number: PCT/IT2009/000110
(87) International publication number: WO 2010/109498

(56) References cited:
- US-A- 4 474 327
- US-A- 5 190 225
- US-A- 5 779 161

## Description

The present invention relates to a portable device for distribution of granular material, such as various types of corn or manure/fertilisers in a state of heterogeneous aggregation. Such a device is known, for instance, from document US 4 474 327.

It is known that in the agricultural field operations for spreading and/or distributing different types of materials or substances (on the ground or the cultivated areas, also of the arboreal type) are required; let us think about, for example, the pesticides, the reinforcing treatments, the manuring/fertilising operations or also about sowing on very wide areas.

An important aid for execution of these works is given by suitable portable powered devices, that operators moving on foot usually carry on their shoulder; these devices, generally known in the art as "atomisers" are usually based on a propulsory apparatus that in turn drives a blowing fan; this fan generates an air flow into which the material to be distributed/spread is introduced (which material is conveniently housed in a holding tank) and the air flow entraining the suspended material is routed towards a flexible tube.

While the above mentioned known art is widely used, it has some non-negligible drawbacks.

First of all, the atomisers of known type, based on this structural architecture have some "uniqueness" in use since, due to the particular nature of the material to be distributed/spread, construction details specifically sized and designed for the material itself are required; in other words, the atomisers of known type conceived for granular materials cannot be used for spreading materials having different aggregation states (fine powders, liquids and others).

At the same time, atomisers for granular materials of known type can be subjected to phenomena involving irregularities in the material emission, which are mostly due to the highly heterogeneous nature of the material particle size; actually, clogging phenomena can occur, when too much material is accumulated at the entrance of the flexible tube or, on the contrary, discontinuous or too weak emissions can occur when the blowing action of the fan generates an insufficient power and/or a material suction in a region of the holding tank that is particularly "empty".

Accordingly, the present invention aims at conceiving a portable device for granular material distribution capable of obviating the above mentioned limits.

Mainly, the present invention aims at conceiving a device that can offer a high efficiency in the distribution/spreading of granular materials (seeds, rice, manure and any other substance or material having a "macroscopic" particle size and a certain difference and/or randomness degree in the average conformation/size of the granular particles), thus avoiding irregularities in operation and ensuring high homogeneity in the material flow coming out of the device.

Another aim of the present invention is to conceive a device that can be adjusted in a reduced period of time and at low costs, so that it can work as a distributor/spreader of products and substances in aggregation states different from that defined above as a "granular" state (i.e. fine powders, liquids and others).

Therefore the present invention aims at conceiving a device offering a great ease of use and control for an operator and that can be dismantled and examined/checked in a very simple and quick manner.

The technical task mentioned and the aims specified are substantially achieved by a portable device for granular material distribution according to claim 1.

Description of a preferred but not exclusive embodiment of a portable device for granular material distribution in accordance with the present invention is now given by way of non-limiting example, with reference to the accompanying drawings, in which:

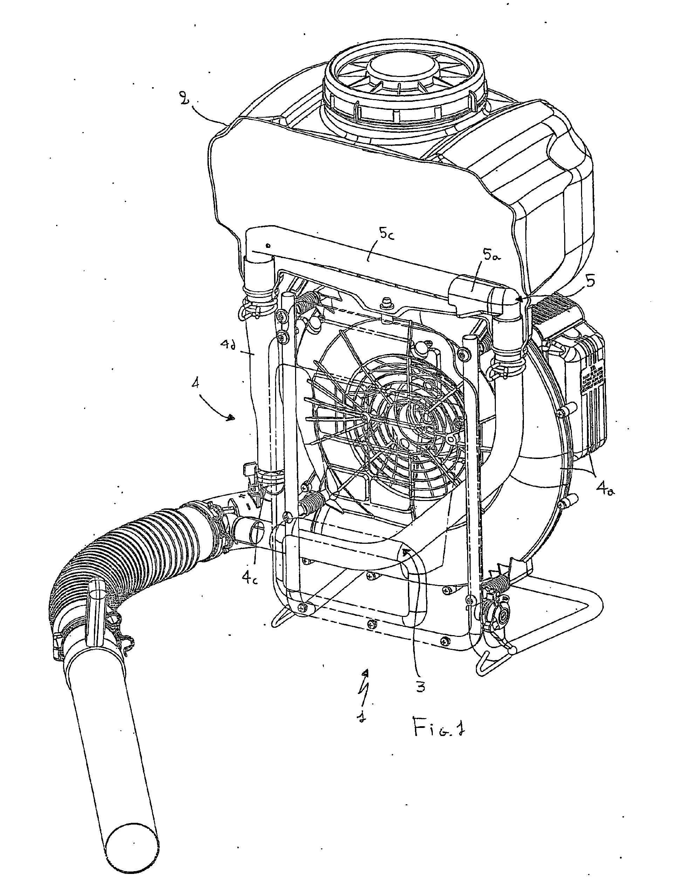

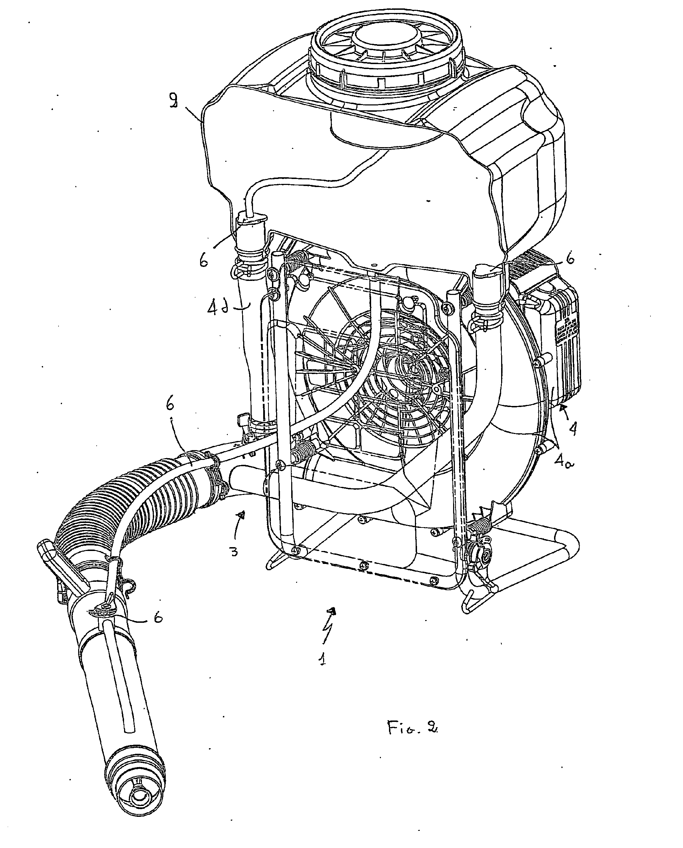

- Figs. 1 and 2 show perspective views of a device according to the invention; and

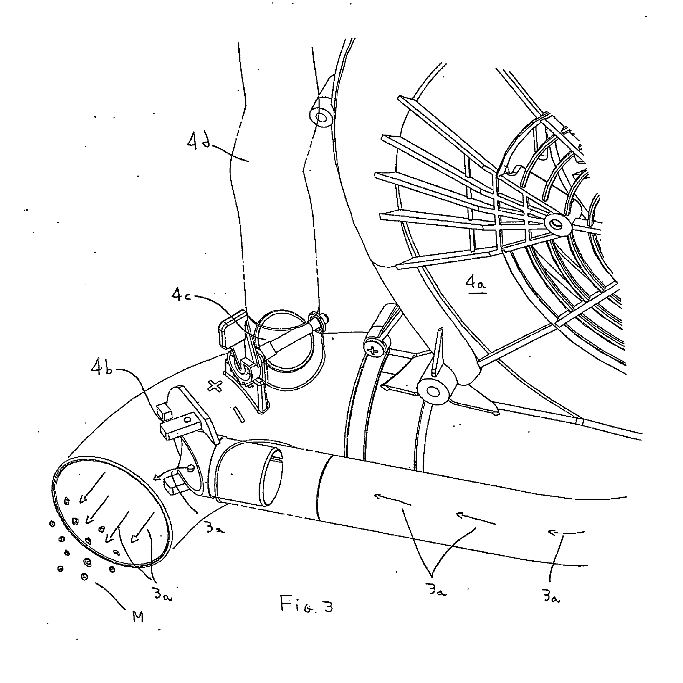

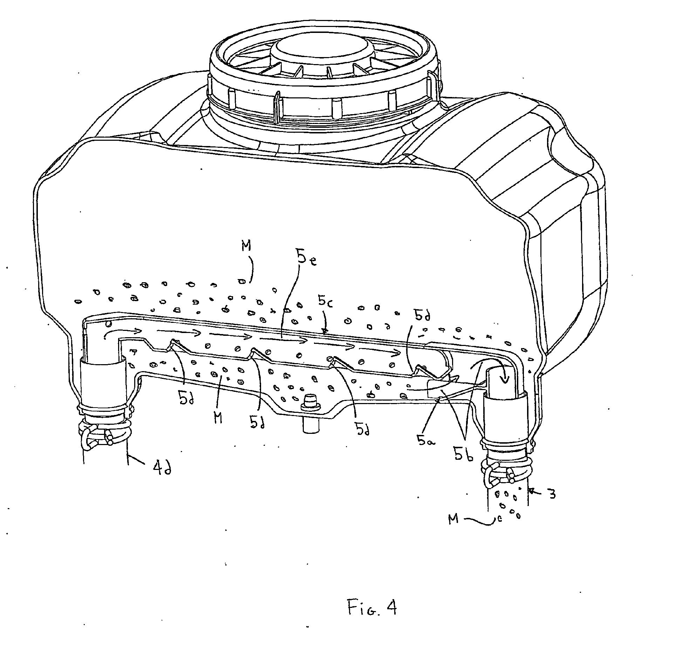

- Figs. 3 and 4 are perspective views of structural/operating details of the devices seen in Fig. 1 or 2.

With reference to the drawings, in the portable device for granular material distribution in accordance with the present invention and generally identified by reference numeral 1, there is a holding body 2 (adapted to house a predetermined amount of granular material M) and, denoted at 3, suitable conveying means connected to said holding body 2 and adapted to eject the granular material M in at least one outflow direction 3a (which typically can be the exit direction defined by a flexible tube, as described in more detail in the following); also present is propulsion means 4 acting on the conveying means 3 and adapted to transport the granular material M being mixed with, and entrained by an air mass.

Advantageously, the present invention contemplates the presence of selective loading means 5 for the granular material M, which means can be reversibly configured between a lock condition (at which entry of the granular material M into the conveying means 3 is inhibited) and a suction condition (at which, on the contrary, admission of the granular material M into the conveying means is caused).

Unlike the known art, in which "selective loading" of the granular material does not occur (which material therefore invades the conveying means even when ejection of said granular material is not required), the present invention is capable of directing and loading the granular material only when the true ejection conditions exist (for instance, when according to the operator's opinion, at that moment distribution/spreading of the material M is necessary); this enables clogging (and also insufficient or discontinuous flows) to be avoided, which is typical of known devices, the corresponding "conveying means" of which can be filled with the granular material without however the existence of an appropriate air mass in movement keeping them suspended and without the presence of a dynamic mixing.

In more detail in terms of operation of the present invention, it is possible to see that the propulsion means 4 can be reversibly configured between a "slow-running" condition at which the flow of the granular material M through the conveying means 3 is practically zero, and at least one thrust condition at which on the contrary said granular material M flow takes a non-zero value; in co-ordination with these possible operating conditions (that are practically decided by the operator by a command varying the mechanical power sent to the propulsion means 4, for example), the selective loading means 5 can be advantageously (and reversibly) configured between the lock condition (in co-ordination with the corresponding "slow-running" condition of the propulsion means 4) and the suction condition (in co-ordination with the corresponding "thrust" condition of the propulsion means 4).

From a structural point of view, and in order to enable the selective loading means 5 to be configured as above described, said means comprises at least one hollow lead-in or guide body 5a, which is disposed internally of the holding body 2 and defines a loading direction 5b for the granular material M; the selective loading means 5 further comprises at least one propulsor 5c adapted to determine a thrust on the granular material M (and in particular on the granular material M housed in the holding body 2) in a direction having at least one component coincident with the loading direction 5b. In other words, the selective loading means 5 according to the present invention is able to cause entry of the granular material M into the conveying means only under some operating conditions of the device 1 (and more particularly, only when a turbulence in the material M is generated that routes said material in a movement direction that is compatible with the geometry of the hollow lead-in body 5a).

According to an embodiment shown in the figures, propulsor 5c comprises a nozzle 5d disposed internally of the holding body and facing the hollow lead-in body 5a; should the current requirements need it (for instance, in order to generate a suitable distribution of turbulence inside the granular material M), the propulsor can conveniently comprise a plurality of nozzles 5d turned towards the hollow lead-in body 5a.

In order to conveniently route or guide an air mass inside the granular material M, propulsor 5c further comprises an axial duct 5e extending along an extension axis oriented towards the hollow lead-in body 5a; this axial duct 5e practically conveys pressurised air (or more generally a turbulence-promoting agent) into the holding body 2 and preferably into a portion of the holding body 2 in which the material M is gathered; injection of air into the material M gives rise to a turbulent movement of same and therefore promotes entry of the material M into the hollow lead-in body 5a.

At this point, it is important to notice that within the scope of the present invention, the hollow lead-in body 5a is such shaped that movement of the granular material M inside it is only enabled when this material is made sufficiently "turbulent" and preferably only when movement of the granular material M in its "turbulent" state has a direction (and a kinetic energy) compatible with the geometry of the hollow lead-in body 5a (or in other words, when the movement direction of the granular material M is substantially coincident with the load (5b) direction).

For achieving the above aim, the hollow lead-in body 5a comprises an inlet portion (defining a passage section facing at least one nozzle 5d), a loading portion connected to the inlet portion (and adapted to impart an increase in the potential energy of a granular material M passing through the loading portion) and finally an admission portion connected to the loading portion (and adapted to admit the granular material M into the conveying means 3).

Division of the hollow lead-in body 5a practically involves the presence of an inlet opening (corresponding to the inlet portion) the front section of which is directly proportional to a maximum admissible flow rate of granular material M and at the same time also involves a suitable type of "intermediate pipeline" (corresponding to the loading portion) the conformation of which allows the kinetic energy imparted to the turbulent flow of the granular material M (that entered said inlet opening successfully, due to its vectorial speed and its scalar kinetic energy from propulsor 5c) to be converted into potential energy; this conversion is the result of a level increase of the granular material M that in this manner can overcome an "inlet threshold" (corresponding to the admission portion) introducing it into the conveying means 3.

Due to this mechanism for conversion of the "mechanical" energy linked to the granular material 3, it is important to notice that in a "slow-running" condition of the propulsion means, propulsor 5c does not energise the granular material M that therefore has no possibility of stepping over the "barrier of potential energy" consisting of the loading portion; in this manner clogging of the conveying means is prevented.

The optimal treatment of the granular material M and in particular a suitable energising of same are ensured by an appropriate positioning of the hollow lead-in body 5a and of propulsor 5c; in particular, the holding body 2 has a gathering portion in which the granular material M has a minimum potential energy (under conditions of normal use of device 1, this portion substantially corresponds to the "bottom" of the holding body 2); specifically, propulsor 5c and/or the hollow lead-in body 5a are positioned close to and/or at this gathering portion.

As to the conveying means 3, it comprises a tubular element (preferably of the flexible type or at all events that can be freely and rotatably handled by an operator), which in turn has an inlet connected to the holding body 2 (and preferably connected to the hollow lead-in body 5a) and an outlet opposite to said inlet.

At the same time, the propulsion means 4 comprises:
- an air flow source 4a connected to a motor and adapted to generate, preferably through a fan or similar blowing device, an air flow to be at least contained in the conveying means 3;
- a bypass unit 4b positioned in the tubular element and adapted to draw a portion of this air flow (that practically travels within the conveying means 3 or more correctly is contained inside the conveying means 3) and send it at least towards propulsor 5c, through a suitable branch pipe 4d; and
- choking means 4c operatively acting on the bypass unit 4b to selectively choke said air flow portion towards propulsor 5c (still through the branch pipe 4d shown in the figures).

In order to exert a more accurate control of the kinetic energy and/or the turbulence to be imparted to the granular material M, this choking means 4c can be actuated by an operator (co-ordinately with a power command on the motor of the propulsion means, or also independently of any other operating parameter) and in a particularly appreciated embodiment of the present invention it comprises a throttle valve; this throttle valve can be conveniently configured in a closed position (which position can be taken in co-ordination with the "slow-running" condition of the propulsion means 4) or in a plurality of open positions (partly or fully open conditions, depending on current requirements).

For the purpose of enabling an appropriate ejection of the granular material M from the conveying means 3, the bypass unit 4b can further comprise a Venturi-effect choke (or similar fluid-operated device) adapted to impart an acceleration to the air flow entraining the suspended granular material M.

The features herein described and claimed in the following can be implemented on a device specifically conceived and assembled for operating on granular materials or can also be mounted on similar portable devices (atomisers or others) that have not been originally conceived for granular materials; to this aim, the present invention can contemplate the presence of new-configuration means 6 which is adapted to enable reversible dismantling of the selective loading means 5. Structurally, this new-configuration means 6 can comprise suitable closure members which can be removably positioned in the bypass unit 4b and/or at a connection between the conveying means 3 and the admission portion of the hollow lead-in body 5a (and can thus enable dismantling of propulsor 5c and/or of the hollow lead-in body 5a, or also closure of the branch pipe 4d); in addition, the new-configuration means 6 can also comprise an extension to be connected to the tubular element of the conveying means 3 (and more particularly, to the inlet of the flexible tube when it is fitted into the holding body 2, so as to enable operation with liquid or powdered materials).

The invention achieves many advantages.

In fact, due to the particular construction architecture of the present device, drawing of the granular material can take place in the most appropriate manner, and a regular (in terms of flow rate) and uniform (in terms of distribution of the material in the passage section) entry of same can be ensured, so that the material is sent to the flexible tube in the best outflow conditions; due to this, the quality of the spreading/distribution work is improved and therefore the working time is reduced, so that the operator's work conditions are made less heavy (the device is to be carried on the operators' shoulder).

In addition, the structural features enabling the present device to be newly configured for operating on different kinds of materials, also of the non-granular type - in other words, the possibility of removing (in a quick and simple manner) the structural elements intended for selective routing of the granular material into the conveying means and replacing them with other components adapted to work on different materials - give the device a wide operating flexibility, therefore allowing the work resources to be better utilised.

In addition, it is to be noted that the present invention can be implemented on already existing atomising devices, i.e. it can allow a retrofit operation, which will further increase the operating capability of the device with reduced costs and ease of intervention.

Finally, thanks to the present invention, low manufacturing costs of the device (or even only of those structural/operating parts enabling the device to operate on granular materials) are ensured and particular adaptations and changes or modifications are not required even when use of devices of known type is contemplated, which is advantageous in terms of global production economy and final price of the product.

## Claims

1. A portable device for granular material distribution, comprising:
- a holding body (2) adapted to house a predetermined amount of granular material (M);
- conveying means (3) connected to said holding body (2) and adapted to eject said granular material (M) in at least one outflow direction (3a);
- propulsion means (4) acting on said conveying means (3) and suitable for transport of the granular material (M) mixed with an air mass and entrained thereby, said propulsion means (4) comprising an air flow source (4a) connected to a motor and adapted to generate, preferably through a fan or a similar blowing device, an air flow to be contained at least in the conveying means (3), said propulsion means (4) also being reversibly configurable between:
- a "slow-running" condition at which a flow of granular material (M) through the conveying means (3) is zero, and
- at least one thrust condition at which said flow of granular material (M) takes a non-zero value,
said selective loading means (5) being configured in said lock condition in co-ordination with said "slow-running" condition of the propulsion means (4) and being configured in said suction condition in co-ordination with said thrust condition of the propulsion means (4); and
- means (5) for selective loading of the granular material (M), which can be reversibly configured between a lock condition at which entry of the granular material (M) into the conveying means (3) is inhibited and a suction condition at which on the contrary admission of the granular material (M) into the conveying means is caused,
**characterised in that** it further comprises:
- a bypass unit (4b) positioned in said conveying means (3) and adapted to draw a portion of said air flow containable in the conveying means (3) and send it at least towards the propulsor (5c); and
- choking means (4c) operatively acting on said bypass unit (4b) to selectively choke said air flow portion towards the propulsor (5c), said choking means (4c) preferably comprising a throttle valve and said throttle valve being more preferably configured in a closed position in co-ordination with the "slow-running" condition of the propulsion means (4).

2. A device as claimed in claim 1, wherein the selective loading means (5) comprises:
- at least one hollow lead-in body (5a) disposed internally of the holding body (2) and defining a loading direction (5b) for the granular material (M); and
- at least one propulsor (5c) adapted to determine a thrust on the granular material (M) in a direction having at least one component coincident with said loading direction (5b).

3. A device as claimed in claim 2, wherein said propulsor (5c) comprises at least one nozzle (5d) disposed inside the holding body and opening towards said hollow lead-in body (5a), the propulsor preferably comprising a plurality of nozzles (5d) opening towards the hollow lead-in body (5a).

4. A device as claimed in claims 2 and 3, wherein the propulsor (5c) further comprises an axial duct (5e) extending along an extension axis oriented towards the hollow lead-in body (5a).

5. A device as claimed in anyone of the preceding claims 2 to 4, wherein the hollow lead-in body (5a) comprises:
- an inlet portion defining a passage section turned towards at least one nozzle (5d);
- a loading portion connected to said inlet portion and adapted to impart a potential-energy increase of a granular material (M) passing through the loading portion itself; and
- an admission portion connected to said loading portion and adapted to admit the granular material (M) into the conveying means (3).

6. A device as claimed in anyone of the preceding claims, wherein the holding body (2) has a gathering portion in which the granular material (M) has a minimum potential energy, the propulsor (5c) and/or the hollow lead-in body (5a) being positioned close to and/or at said gathering portion.

7. A device as claimed in anyone of the preceding claims, wherein the conveying means (3) comprises a preferably flexible tubular element having an inlet connected to the holding body (2) and preferably connected to the hollow lead-in body (5a) and an outlet opposite to said inlet and preferably adapted to be freely and rotatably handled by an operator.

8. A device as claimed in anyone of the preceding claims, wherein also present is new-configuration means (6) adapted to enable reversible dismantling of the selective loading means (5), said new-configuration means (6) preferably comprising closure members which can be removably positioned in the bypass unit (4b) and/or at a connection between the conveying means (3) and the admission portion of the hollow lead-in body (5a), the new-configuration means (6) most preferably comprising an extension to be connected to the tubular element of the conveying means (3) at a fitting position of same into the holding body (2) and/or a suction tube connected to the holding body (2) and the conveying means (3).

## Patentansprüche

1. Tragbare Vorrichtung zum Verteilen von granulatförmigem Material, umfassend:
- einen Haltekörper (2), der dazu geeignet ist, eine bestimmt Menge granulatförmigen Materials (M) aufzunehmen;
- Fördermittel (3), die mit dem Haltekörper (2) verbunden sind und dazu geeignet sind, das granulatförmige Material (M) in mindestens eine Ausströmrichtung (3a) auszugeben;
- Antriebsmittel (4), die auf die Fördermittel (3) einwirken und zum Transport des granulatförmigen Materials (M) geeignet sind, das mit einer Luftmasse gemischt und dabei mitgeführt wird, wobei die Antriebsmittel (4) eine Luftstromquelle (4a) umfassen, die mit einem Motor verbunden ist und dazu geeignet ist, vorzugsweise durch einen Ventilator oder eine ähnliche Gebläsevorrichtung, einen zumindest in den Fördermitteln (3) zu enthaltenden Luftstrom zu erzeugen, wobei die Antriebsmittel (4) ferner zwischen Folgendem umkehrbar konfigurierbar sind:
- einen "Langsamlauf"-Zustand, bei dem ein Strom granulatförmigen Materials (M) durch die Fördermittel (3) Null beträgt, und
- mindestens einen Schubzustand, bei dem der Strom granulatförmigen Materials (M) einen Nicht-Null-Wert einnimmt,
wobei die selektiven Lademittel (5) im Verschlusszustand in Abstimmung mit dem "Langsamlauf"-Zustand der Antriebsmittel (4) konfiguriert sind und im Ansaugzustand in Abstimmung mit dem Schubzustand der Antriebsmittel (4) konfiguriert sind, und
- Mittel (5) zum selektiven Laden des granulatförmigen Materials (M), die umkehrbar zwischen einem Verschlusszustand, in dem der Eintritt des granulatförmigen Materials (M) in die Fördermittel (3) verhindert wird, und einem Ansaugzustand, in dem im Gegensatz dazu der Einlass des granulatförmigen Materials (M) in die Fördermittel verursacht wird, konfiguriert werden können,
**dadurch gekennzeichnet, dass** sie ferner Folgendes umfasst:
- eine Bypass-Einheit (4b), die in den Fördermitteln (3) positioniert ist und dazu geeignet ist, einen Abschnitt des in den Fördermitteln (3) enthaltbaren Luftstroms anzuziehen und ihn zumindest zum Antrieb (5c) zu senden, und
- Drosselmittel (4c), die betriebswirksam auf die Bypass-Einheit (4b) einwirken, um den Luftstromabschnitt zum Antrieb (5c) hin selektiv zu drosseln, wobei die Drosselmittel (4c) vorzugsweise ein Expansionsventil umfassen und das Expansionsventil weiter bevorzugt in einer geschlossenen Position in Abstimmung mit dem "Langsamlauf"-Zustand der Antriebsmittel (4) konfiguriert ist.

2. Vorrichtung nach Anspruch 1, wobei die selektiven Lademittel (5) Folgendes umfassen:
- mindestens einen hohlen Zuleitungskörper (5a), der innerhalb des Haltekörpers (2) angeordnet ist und eine Richtung (5b) zum Laden des granulatförmigen Materials (M) definiert, und
- mindestens einen Antrieb (5c), der dazu geeignet ist, einen Schub auf das granulatförmige Material (M) in eine Richtung auszuüben, aufweisend mindestens eine Komponente, die mit der Laderichtung (5b) übereinstimmt.

3. Vorrichtung nach Anspruch 2, wobei der Antrieb (5c) mindestens eine Düse (5d) umfasst, die innerhalb des Haltekörpers angeordnet ist und sich zum hohlen Zuleitungskörper (5a) hin öffnet, wobei der Antrieb vorzugsweise eine Vielzahl von Düsen (5d) umfasst, die sich zum hohlen Zuleitungskörper (5a) hin öffnen.

4. Vorrichtung nach den Ansprüchen 2 und 3, wobei der Antrieb (5c) ferner eine axiale Leitung (5e) umfasst, die sich entlang einer Ausdehnungsachse ausdehnt, die zum hohlen Zuleitungskörper (5a) hin ausgerichtet ist.

5. Vorrichtung nach einem der Ansprüche 2 bis 4, wobei der hohle Zuleitungskörper (5a) Folgendes umfasst:
- einen Zulaufabschnitt, der einen Durchlaufbereich definiert, der mindestens einer Düse (5d) zugewandt ist;
- einen Ladeabschnitt, der mit dem Zulaufabschnitt verbunden ist und dazu geeignet ist, einen Anstieg potenzieller Energie eines granulatförmigen Materials (M), das durch den Ladeabschnitt hindurchläuft, zu übertragen, und
- einen Einlassabschnitt, der mit dem Ladeabschnitt verbunden ist und dazu geeignet ist, das granulatförmige Material (M) in die Fördermittel (3) einzulassen.

6. Vorrichtung nach einem der vorangehenden Ansprüche, wobei der Haltekörper (2) einen Sammelabschnitt aufweist, in dem das granulatförmige Material (M) eine minimale, potenzielle Energie aufweist, wobei der Antrieb (5c) und/oder der hohle Zuleitungskörper (5a) in der Nähe und/oder am Sammelabschnitt positioniert ist/sind.

7. Vorrichtung nach einem der vorangehenden Ansprüche, wobei die Fördermittel (3) ein vorzugsweise flexibles rohrförmiges Element umfassen, aufweisend einen Zulauf, der mit dem Haltekörper (2) verbunden ist und vorzugsweise mit dem hohlen Zuleitungskörper (5a) verbunden ist, und einen Auslauf, der gegenüber dem Zulauf liegt und dazu geeignet ist, frei und drehbar von einem Bediener gehandhabt zu werden.

8. Vorrichtung nach einem der vorangehenden Ansprüche, wobei zudem Mittel (6) zur Neukonfiguration vorhanden sind, die dazu geeignet sind, umkehrbar das Abmontieren der selektiven Lademittel (5) zu ermöglichen, wobei die Mittel (6) zur Neukonfiguration vorzugsweise Schließglieder umfassen, die entfernbar in der Bypass-Einheit (4b) und/oder an einer Verbindung zwischen den Fördermitteln (3) und dem Einlassabschnitt des hohlen Zuleitungskörpers (5a) positioniert werden können, wobei die Mittel (6) zur Neukonfigurierung am meisten bevorzugt eine Ausdehnung, die mit dem rohrförmigen Element der Fördermittel (3) an einer Aufsatzposition dieser in den Haltekörper (2) hinein zu verbinden ist und/oder ein Ansaugrohr umfassen, das mit dem Haltekörper (2) und den Fördermitteln (3) verbunden ist.

## Revendications

1. Dispositif portable pour la distribution de matériau granulaire, comprenant .
- un corps de maintien (2) pour contenir une quantité prédéterminée de matériau granulaire (M) ;
- un moyen d'acheminement (3) relié audit corps de maintien (2) et adapté pour éjecter ledit matériau granulaire (M) dans au moins une direction de jet (3a) ;
- un moyen de propulsion (4) agissant sur ledit moyen d'acheminement (3) et indiqué pour le transport du matériau granulaire (M) mélangé à une masse d'air et ainsi entraîné, ledit moyen de propulsion (4) comprenant une source du flux d'air (4a) reliée à un moteur et adaptée pour générer, de préférence par l'intermédiaire d'un ventilateur ou d'un dispositif de soufflage analogue, un flux d'air qui doit être contenu au moins dans ledit moyen d'acheminement (3), ledit moyen de propulsion (4) étant également configurable de façon réversible entre :
- une condition « lente » dans laquelle un flux de matériau granulaire (M) à travers le moyen d'acheminement (3) est zéro, et
- au moins une condition de poussée dans laquelle ledit flux de matériau granulaire (M) prend une valeur non nulle,
ledit moyen de chargement sélectif (5) étant configuré dans ladite condition de verrouillage en coordination avec ladite condition « lente » du moyen de propulsion (4) et étant configuré dans ladite condition d'aspiration en coordination avec ladite condition de poussée du moyen de propulsion (4) ; et
- un moyen (5) pour le chargement sélectif du matériau granulaire (M), qui peut être configuré de façon réversible entre une condition verrouillée dans laquelle l'entrée du matériau granulaire (M) dans le moyen d'acheminement (3) est inhibée et une condition d'aspiration dans laquelle est, au contraire, provoquée l'entrée du matériau granulaire (M) dans le moyen d'acheminement,
**caractérisé en ce qu'**il comprend également :
- une unité de dérivation (4b) positionnée dans ledit moyen d'acheminement (3) et pouvant aspirer une portion dudit flux d'air pouvant être contenu dans le moyen d'acheminement (3) l'envoyer au moins vers le propulseur (5c) ; et
- un moyen d'étranglement (4c) agissant de façon opérationnelle sur ladite unité de dérivation (4b) pour étrangler de façon sélective ladite portion du flux d'air vers le propulseur (5c), ledit moyen d'étranglement (4c) comprenant de préférence un clapet anti-retour et ledit clapet anti-retour étant plus de préférence encore configuré dans une position fermée en coordination avec la condition « lente » du moyen de propulsion (4).

2. Dispositif selon la revendication 1, dans lequel le moyen de chargement sélectif (5) comprend :
- au moins un corps de traversée creux (5a) disposé à l'intérieur du corps de maintien (2) et définissant une direction de chargement (5b) pour le matériau granulaire (M) ; et
- au moins un propulseur (5c) pour déterminer une poussée sur le matériau granulaire (M) dans une direction ayant au moins un composant qui coïncide avec ladite direction de chargement (5b).

3. Dispositif selon la revendication 2, dans lequel ledit propulseur (5c) comprend au moins une buse (5d) disposée à l'intérieur du corps de maintien et s'ouvrant vers ledit corps de traversée creux (5a), le propulseur comprenant de préférence une pluralité de buses (5d) s'ouvrant vers ledit corps de traversée creux (5a).

4. Dispositif selon les revendications 2 et 3, dans lequel le propulseur (5c) comprend également un canal axial (5e) se développant le long d'un axe d'extension orienté vers le corps de traversée creux (5a).

5. Dispositif selon l'une quelconque des revendications précédentes 2 à 4, dans lequel le corps de traversée creux (5a) comprend :
- une portion d'entrée définissant une section de passage tournée vers au moins une buse (5d) ;
- une portion de chargement reliée à ladite portion d'entrée et adaptée pour donner une augmentation d'énergie potentielle du matériau granulaire (M) passant à travers la portion de chargement ; et
- une portion d'admission reliée à ladite portion de chargement et adaptée pour laisser entrer le matériau granulaire (M) dans le moyen d'acheminement (3).

6. Dispositif selon l'une quelconque des revendications précédentes, dans lequel le corps de maintien (2) possède une portion de collecte dans laquelle le matériau granulaire (M) a une énergie potentielle minimale, le propulseur (5c) et/ou le corps de traversée creux (5a) étant positionnés près de et/ou au niveau de la portion de collecte.

7. Dispositif selon l'une quelconque des revendications précédentes, dans lequel le moyen d'acheminement (3) comprend un élément tubulaire de préférence flexible ayant une entrée reliée au corps de maintien (2) et de préférence reliée au corps de traversée creux (5a) et une sortie en face de ladite entrée et de préférence adaptée pour être manipulée librement et de façon rotative par un opérateur.

8. Dispositif selon l'une quelconque des revendications précédentes, dans lequel est également présent un moyen de nouvelle configuration (6) pour permettre le démontage réversible du moyen de chargement sélectif (5), ledit moyen de nouvelle configuration (6) comprenant de préférence des éléments de fermeture qui peuvent être positionnés de façon amovible dans l'unité de dérivation (4b) et/ou au niveau d'un accouplement entre le moyen d'acheminement (3) et la portion d'admission du corps de traversée creux (5a), le moyen de nouvelle configuration (6) comprenant plus préférentiellement un prolongement à relier à l'élément tubulaire du moyen d'acheminement (3) dans une position de montage de ce dernier dans le corps de maintien (2) et/ou un tube d'aspiration relié au corps de maintien (2) et au moyen d'acheminement (3).
